Europäisches Patentamt

European Patent Office

Office européen des brevets

(19)

(11) Veröffentlichungsnummer: **0 013 888**
**B1**

(12) **EUROPÄISCHE PATENTSCHRIFT**

(45) Veröffentlichungstag der Patentschrift:
30.05.84

(51) Int. Cl.³: **C 09 B 47/10**

(21) Anmeldenummer: 80100054.8

(22) Anmeldetag: 07.01.80

(54) Verfahren zur Halogenierung von Kupferphthalocyanin.

(30) Priorität: 18.01.79 DE 2901859

(43) Veröffentlichungstag der Anmeldung:
06.08.80 Patentblatt 80/16

(45) Bekanntmachung des Hinweises auf die Patenterteilung:
30.05.84 Patentblatt 84/22

(84) Benannte Vertragsstaaten:
CH DE FR GB

(56) Entgegenhaltungen:
DE - A - 2 449 133
FR - A - 815 088
FR - A - 1 352 337
GB - A - 2 010 305

**Die Akte enthält technische Angaben, die nach dem Eingang der Anmeldung eingereicht wurden und die nicht in dieser Patentschrift enthalten sind.**

(73) Patentinhaber: BAYER AG, Konzernverwaltung RP Patentabteilung, D-5090 Leverkusen 1 Bayerwerk (DE)

(72) Erfinder: Wessling, Diether, Dr., Haferkamp 4, D-5000 Köln 80 (DE)

## Beschreibung

Es ist bekannt, dass man durch annähernde Perhalogenierung von Kupferphthalocyanin grüne bis gelbgrüne Halogenderivate mit ähnlich guten Echtheitseigenschaften erhalten kann, wie sie der blaue Grundkörper besitzt.

Eine vollständige Substitution der 16 Wasserstoffatome ist technisch wenig sinnvoll, weil nach der Einführung von etwa 15,5 Halogenatomen die weitere Substitution sehr erschwert ist und mit teilweiser Molekülzerstörung einhergeht.

Die «technische Perhalogenierung», von der im folgenden die Rede ist, beinhaltet daher die Einführung von maximal 14 bis 15,5 Halogenatomen pro CuPc-Molekül.

Als Halogenierungsmedium werden in der Literatur vorwiegend anorganische Verbindungen genannt, von denen Friedel-Crafts-Katalysatoren, wie z. B. die Halogenide des Aluminiums, Eisens, Zinks und Antimons besonders geeignet sind. Von diesen Salzen haben die Halogenide des Aluminiums, insbesondere dessen Chloride, die grösste Bedeutung in der Technik erlangt.

Zur Schmelzpunkterniedrigung setzt man dem Aluminiumchlorid üblicherweise Fliessmittel zu, die man in zwei Gruppen einteilen kann:

1. Alkalihalogenide
2. Schwefelverbindungen, die Sauerstoff und/ oder Halogen enthalten.

Als Halogene sind Chlor und Brom von besonderem technischem Interesse, die z. B. in Form der unter 2) genannten Schwefelverbindungen, vorzugsweise jedoch in elementarer Form, in die Halogenierungsreaktion eingesetzt werden.

Ein technisch einfach und sicher durchzuführendes Halogenierungsverfahren, das zudem Rohpigmente in einer formiertechnisch besonders günstigen Form liefert, die sich durch übliche Nachbehandlungen sehr leicht in coloristisch hervorragende Pigmente überführen lassen, ist in der DE-AS 2449133 beschrieben.

Bei diesem Verfahren wird CuPc in einer $AlCl_3$/ $NaCl/SO_2Cl_2$-Schmelze bei 90 bis 150°C durch Einleiten von elementarem Chlor und/oder Brom «perchloriert» oder gemischt «perbromiert/-chloriert».

Es wurde nun gefunden, dass sich die «Perhalogenierung» von Kupferphthalocyanin besonders vorteilhaft unter Druck ausführen lässt.

Die vorliegende Erfindung betrifft demnach ein Verfahren zur Halogenierung von Kupferphthalocyanin bis zu einem Halogengehalt von etwa 14 bis etwa 15,5 Halogenatomen pro Molekül CuPc in einer Aluminiumchlorid/Sulfurylchlorid-Mischung, die, bezogen auf die $AlCl_3$-Menge, 8 bis 25 Gew.-% eines wasserfreien Alkalimetallhalogenids enthält, dadurch gekennzeichnet, dass die $AlCl_3/SO_2Cl_2$-Mischung, bezogen auf die $AlCl_3$-Menge, 70 bis 150 Gew.-% Sulfurylchlorid enthält und man während der Halogenierung bei einem Überdruck von 1 bis 20 bar arbeitet.

Vorzugsweise arbeitet man beim erfindungsgemässen Verfahren in einem Überdruckbereich von 1 bis 10 bar, ganz besonders bevorzugt bei 3 bis 6 bar.

Das Verfahren dient vorzugsweise zur Chlorierung und/oder Bromierung von CuPc.

Bevorzugt führt man die Halogenierung in einer $AlCl_3/SO_2Cl_2$/Alkalimetallhalogenid-Mischung durch, die, bezogen auf die Menge an $AlCl_3$, 80 bis 130 Gew.-% Sulfurylchlorid und 10 bis 15 Gew.-% Natriumchlorid enthält. Als Alkalimetallhalogenide können z. B. anstelle von NaCl auch KCl, NaBr und KBr verwendet werden.

Die «Perhalogenierung» wird zweckmässigerweise bei Temperaturen von 90 bis 150°C durchgeführt; sie kann in einer reinen Chlorierung durch Einleiten von elementarem Chlor oder in einer gemischten Chlorierung und Bromierung bestehen, bei der man auch Brom zugibt, wobei die Halogene jeweils unter Druck zudosiert werden.

Durch Halogenierung unter Druck wird überraschenderweise die Reaktionsgeschwindigkeit und die prozentuale chemische Ausnutzung des angebotenen Halogenierungsmittels deutlich erhöht, woraus wesentliche ökonomische und ökologische Vorteile resultieren.

Diese Effekte waren nicht vorherzusehen, da von der Druckerhöhung im Gasraum über der Chlorierungsschmelze nicht nur die Halogenierungsmittel (Chlor und/oder Brom) sondern auch die Reaktionsabgase (HCl, HBr) betroffen sind und man von letzteren infolge ihrer höheren Polarität eine höhere Affinität zu der polaren $AlCl_3$-Schmelze erwartet hätte, die damit als Aktivierungsmedium für die Halogene eher an Wirksamkeit hätte verlieren sollen.

Ein weiterer überraschender Effekt ist die Tatsache, dass beim Aufheizen der aus $AlCl_3/SO_2Cl_2$/ CuPc/ggf. $Br_2$ und einem Alkaligemisch bestehenden Halogenierungsschmelze unter Druck auf die «Perhalogenierungs»-Endtemperatur oberhalb 90°C praktisch nur gasförmige, mit Wasserkühlern nicht kondensierbare Stoffe entweichen, sodass auf Kühler, die aus Sicherheitsgründen besonderer Ausführungen bedürfen, verzichtet werden kann.

Beispiel 1

In einem Reaktionsgefäss legt man 40,0 kg wasserfreies Aluminiumchlorid, 5,0 kg wasserfreies Natriumchlorid und 43,0 kg Sulfurylchlorid vor und erwärmt die Suspension auf 50 bis 65°C. Bei dieser Temperatur trägt man in 3 bis 4 Stunden 16,0 kg Kupferphthalocyanin ein. Dann verschliesst man das Reaktionsgefäss und erhitzt in 3 bis 4 Stunden auf 100 bis 110°C.

Wenn der Überdruck 4,5 bar überschreitet, entlüftet man das Reaktionsgefäss soviel, dass sich ein Überdruck von 4 bis 4,5 bar einstellt.

Wenn 100 bis 110°C erreicht sind, wird unter Druck mit der Einleitung von 18,0 bis 20,0 kg Chlor mit einer Geschwindigkeit von 3,0 bis 5,0 kg/h begonnen, während die Halogenierungsschmelze gleichzeitig auf 140 bis 150°C weiter erhitzt wird. Durch kontinuierliches Entlüften wird der Überdruck des Reaktionsgefässes bei 4 bis 4,5 bar gehalten.

Die Schmelze wird auf 200 bis 300 kg Wasser ausgetragen. Unter Durchleiten von Luft erhitzt man 1 bis 2 Stunden auf 90 bis 100° C, filtriert dann heiss ab, wäscht mit heissem Wasser salzfrei und trocknet bei 80 bis 120° C.

Das so erhaltene Rohpigment hat einen Chlorgehalt von 48,0 bis 49,5 % und ist direkt zur Einarbeitung in viele Pigmentpräparationen ohne die sonst übliche Verpastung oder Verquellung aus Schwefelsäure oder Temperung mit organischen Lösungsmitteln geeignet.

Wird ein weiter verbessertes Pigment benötigt, so kann das Rohpigment als feuchter Filterkuchen oder als getrocknete Ware mit Toluol oder anderen organischen Lösungsmitteln, gegebenenfalls unter Zusatz von Alkalien und Emulgatoren, einer thermischen Nachbehandlung bei 80 bis 200° C unterworfen werden.

Beispiel 2

In einem Reaktionsgefäss werden 40,0 kg wasserfreies Aluminiumchlorid, 5,0 kg wasserfreies Natriumchlorid, 50,0 kg Sulfurylchlorid und 17,3 kg Brom vorgelegt und auf 35 bis 45° C erwärmt.

Bei dieser Temperatur trägt man in 3 Stunden 12,0 kg Kupferphthalocyanin ein.

Dann verschliesst man den Kessel druckdicht und erhitzt die Schmelze in 8 bis 10 Stunden auf 120 bis 130° C. Wenn der Innendruck 4,0 bar überschreitet, entlüftet man soviel, dass sich ein Überdruck von 3,5 bis 4,0 bar einstellt.

Ab 120° C beginnt man mit der Einleitung von 2,0 bis 6,0 kg Chlor unter Druck.

Die Aufarbeitung der Schmelze und die Weiterverwendung des Rohpigments werden analog Beispiel 1 vorgenommen.

Das Pigment enthält 39 bis 42 % Brom und 18 bis 21 % Chlor und ist gelbstichig grün.

Wenn man ohne Chlorzugabe arbeitet, kommt man zu einem Pigment mit höherem Brom- und niedrigem Chlorgehalt.

## Patentanspruch

Verfahren zur Halogenierung von Kupferphthalocyanin bis zu einem Halogengehalt von etwa 14 bis etwa 15,5 Halogenatomen pro CuPc-Molekül in einer Aluminiumchlorid/Sulfurylchlorid-Mischung, die bezogen auf die $AlCl_3$-Menge 8 bis 25 Gew.-% eines wasserfreien Alkalimetallhalogenides enthält, dadurch gekennzeichnet, dass die $AlCl_3/SO_2Cl_2$-Mischung, bezogen auf die $AlCl_3$-Menge, 70 bis 150 Gew.-% Sulfurylchlorid enthält und man während der Halogenierung bei einem Überdruck von 1 bis 20 bar arbeitet.

## Claim

A process for halogenating copper phthalocyanine to a halogen content of about 14 to about 15.5 halogen atoms per CuPc molecule, in an aluminium chloride/sulphuryl chloride mixture which contains 8 to 25 % by weight, relative to the amount of $AlCl_3$, of an anhydrous alkali metal halide, characterized in that the $AlCl_3/SO_2Cl_2$ mixture contains 70 to 150 % by weight, relative to the amount of $AlCl_3$, of sulphuryl chloride and the halogenation is carried out under an increased pressure of 1 to 20 bar.

## Revendication

Procédé d'halogénation d'un dérivé de cuivre de la phthalocyanine jusqu'à une teneur en halogènes d'environ 14 à environ 15,5 atomes d'halogènes par molécule de CuPc dans un mélange chlorure d'aluminium/chlorure de sulfuryle, qui contient, par rapport à la quantité de $AlCl_3$, 8 à 25 % en poids d'un halogénure de métal alcalin anhydre, caractérisé en ce que le mélange $AlCl_3/SO_2Cl_2$ contient, par rapport à la quantité de $AlCl_3$, 70 à 150 % en poids de chlorure de sulfuryle, et on opère pendant l'halogénation à une surpression de 1 à 20 bars.